(19) Europäisches Patentamt
European Patent Office
Office européen des brevets

(11) **EP 4 647 804 A2**

(12) **EUROPÄISCHE PATENTANMELDUNG**

(43) Veröffentlichungstag:
**12.11.2025  Patentblatt 2025/46**

(21) Anmeldenummer: **25174016.3**

(22) Anmeldetag: **02.05.2025**

(51) Internationale Patentklassifikation (IPC):
**G01S 7/35** (2006.01)　　**G01S 13/34** (2006.01)
**G01F 23/284** (2006.01)　　**G01S 13/88** (2006.01)

(52) Gemeinsame Patentklassifikation (CPC):
**G01S 7/356; G01F 23/284; G01S 13/343; G01S 13/88**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität:  **08.05.2024  DE 102024113005**

(71) Anmelder: **Krohne S.A.S.**
**26103 Romans-sur-Isere Cedex (FR)**

(72) Erfinder: **Dubray, Olivier**
**26300 Chatuzange-Le-Goubet (FR)**

(74) Vertreter: **Gesthuysen Patentanwälte**
**Partnerschaftsgesellschaft mbB**
**Huyssenallee 68**
**45128 Essen (DE)**

(54) **VERFAHREN MIT EINEM RADARGERÄT UND RADARGERÄT**

(57)　Dargestellt und beschrieben ist ein Verfahren mit einem Radargerät (1) zur Bestimmung eines Abstands (d) zwischen dem Radargerät (1) und einem Objekt (2) mittels frequenzmoduliertem Dauerstrichradar.

Das Verfahren löst die Aufgabe, einen Energiebedarf für die Bestimmung des Abstands (d) zu reduzieren, ohne dabei eine Genauigkeit zu beeinträchtigen.

Die Aufgabe ist durch ein Verfahren mit den folgenden Schritten gelöst:

In einem ersten Schritt werden die Teilschritte Erzeugen und Aussenden eines frequenzmodulierten Sendesignals (10), Empfangen eines vom Sendesignal (10) am Objekt (2) hervorgerufenen Reflexionssignals (11) und Mischen des Sendesignals (10) und des Reflexionssignals (11) miteinander zu einem Mischsignal ausgeführt.

In einem zweiten Schritt werden die Teilschritte Bestimmen eines Grobfrequenzspektrums des Mischsignals in einem Grobfrequenzbereich ($f_{min,FFT}$, $f_{max,FFT}$), eines Spektralmaximums (13) im Grobfrequenzspektrum und einer Grobspektralmaximumfrequenz ($f_{k,FFT}$) des Spektralmaximums (13) im Grobfrequenzbereich ($f_{min,FFT}$, $f_{max,FFT}$) ausgeführt.

In einem dritten Schritt werden unter Berücksichtigung der Grobspektralmaximumfrequenz ($f_{k,FFT}$) zum einen ein Frequenzbereich ($f_{min}$, $f_{max}$) und zum anderen eine Anzahl ($M$) an Spektralfrequenzen im Frequenzbereich ($f_{min}$, $f_{max}$) bestimmt, wobei ein Quotient aus dem Frequenzbereich ($f_{max}$ - $f_{min}$) und der Anzahl ($M$) einen Zielspektralfrequenzschritt ($\Delta f$) ergibt.

In einem vierten Schritt wird ein Feinfrequenzspektrum des Mischsignals im Frequenzbereich ($f_{min}$, $f_{max}$) mit der Anzahl ($M$) an Spektralfrequenzen unter Verwendung einer Chirp-Z-Transformation bestimmt.

In einem fünften Schritt wird eine Feinspektralmaximumfrequenz ($f_{k-1}$) des Spektralmaximums (13) im Frequenzbereich ($f_{min}$, $f_{max}$) bestimmt.

In einem sechsten Schritt wird ein Abstand ($d$) zwischen dem Radargerät (1) und dem Objekt (2) unter Verwendung der Feinspektralmaximumfrequenz ($f_{k-1}$) bestimmt.

Fig. 1

**Beschreibung**

Die Erfindung betrifft zum einen ein Verfahren mit einem Radargerät zur Bestimmung eines Abstands zwischen dem Radargerät und einem Objekt mittels frequenzmoduliertem Dauerstrichradar. Zum anderen betrifft die Erfindung auch ein Radargerät zur Bestimmung eines Abstands zwischen dem Radargerät und einem Objekt mittels frequenzmoduliertem Dauerstrichradar.

Ein Radargerät ist allgemein ein Gerät, welches im Betrieb ein Sendesignal erzeugt und aussendet, ein vom Sendesignal an einem Objekt hervorgerufenes Reflexionssignal empfängt und eine Auswertung von dem Reflexionssignal und/oder dem Sendesignal durchführt. Das Reflexionssignal ist ein Echo des Sendesignals am Objekt. Bei dem Sendesignal und folglich auch bei dem Reflexionssignal handelt es sich um elektromagnetische Wellen mit Frequenzen in einem Radarfrequenzbereich. Die Auswertung liefert zumindest eine Information über das Objekt. Die Information ist zum Beispiel eine Entfernung oder eine Geschwindigkeit zwischen dem Radargerät und dem Objekt.

Ein Radargerät weist jedenfalls eine Antennenvorrichtung und eine Steuerung auf. Die Antennenvorrichtung weist entweder eine Antenne zum Senden des Sendesignals und zum Empfangen des Reflexionssignals oder eine Sendeantenne zum Senden des Sendesignals und eine Empfangsantenne zum Empfangen des Reflexionssignals auf. Die Steuerung ist ausgebildet, das Sendesignal zu erzeugen und über die Antennenvorrichtung auszusenden und das Reflexionssignal über die Antennenvorrichtung zu empfangen und eine Auswertung des Reflexionssignals und/oder des Sendesignals durchzuführen.

Das Verfahren und das Radargerät betreffen ein frequenzmoduliertes Dauerstrichradar. Demnach ist eine Frequenz des Sendesignals moduliert. Es handelt sich also gerade nicht um ein Impulsradar oder ein unmoduliertes Dauerstrichradar. Ein frequenzmoduliertes Dauerstrichradar wird auch mit FMCW-Radar abgekürzt. Die Abkürzung steht für frequency modulated continuous wave radar.

Bei einem gattungsgemäßen Verfahren, welches im Betrieb von einem gattungsgemäßen Radargerät ausgeführt wird, werden die folgenden Verfahrensschritte ausgeführt:

- Ein frequenzmoduliertes Sendesignal wird erzeugt und über die Antennenvorrichtung ausgesendet.

- Ein vom ausgesendeten Sendesignal an einem Objekt hervorgerufenes Reflexionssignal wird über die Antennenvorrichtung empfangen.

- Das Sendesignal und das Reflexionssignal werden miteinander zu einem Mischsignal gemischt und ein Frequenzspektrum des Mischsignals wird bestimmt. Das Mischsignal weist eine Schwebung auf.

- Ein Spektralmaximum im Frequenzspektrum und eine Spektralmaximumfrequenz des Spektralmaximums werden bestimmt. Die Schwebung ist im Wesentlichen durch das Spektralmaximum und die Spektralmaximumfrequenz bestimmt.

- Ein Abstand zwischen dem Radargerät und dem Objekt wird unter Verwendung der Spektralmaximumfrequenz bestimmt. Die Spektralmaximumfrequenz korrespondiert mit dem Abstand.

Diese und auch weitere Verfahrensschritte werden grundsätzlich von der Steuerung ausgeführt. Verfahrensschritte werden in folgenden verkürzt als Schritte bezeichnet.

Aus dem Stand der Technik ist bekannt, das Frequenzspektrum des Mischsignals unter Verwendung einer Fast-Fourier-Transformation zu bestimmen. Fast-Fourier-Transformation wird mit FFT abgekürzt.

Fourierkoeffizienten $S_k$ der FFT werden gemäß der folgenden Formel bestimmt:

$$S_k = \sum_{n=0}^{N-1} s_n e^{-2\pi j \frac{n}{N} k} \text{ mit } k = 0, 1, 2, ..., N-1$$

In der obigen Formel sind $s_n$ zeitdiskrete Messwerte des Mischsignals. Diese werden von der Steuerung gemessen. $N$ ist die Anzahl der Messwerte.

Die zu den Fourierkoeffizienten $S_k$ gehörenden Fourierfrequenzen $f_k$ werden gemäß der folgenden Formel bestimmt:

$$f_k = \frac{k}{N} f_s \text{ mit } k = 0, 1, 2, ..., \frac{N}{2}$$

In der Formel ist $f_s$ eine Abtastfrequenz, mit welcher von der Steuerung die Messwerte $s_n$ zeitdiskret abgetastet werden.

Ein Fourierkoeffizient $S_k$ an seiner dazugehörigen Fourierfrequenz $f_k$ stellt eine Spektrallinie dar. Ein Spektralfrequenzschritt von zwei aufeinander folgenden Spektrallinien ist $\Delta f = f_s / N$. Die Spektrallinie mit der niedrigsten Fourierfrequenz ergibt sich für $k = 0$ und liegt bei einer unteren Grenzfrequenz $f_{min,FFT} = f_0 = 0$ und die Spektrallinie mit der höchsten Fourierfrequenz ergibt sich für $k = N/2$ und liegt bei einer oberen Grenzfrequenz von $f_{max,FFT} = f_{N/2} = fs/2$.

Das Frequenzspektrum reicht also von der unteren Grenzfrequenz $f_{min,FFT}$ bis zur oberen Grenzfrequenz $f_{max,FFT}$ und wird gebildet durch die Spektrallinien, wobei jede Spektrallinie durch einen Fourierkoeffizienten $S_k$ und eine Fourierfrequenz $f_k$ gekennzeichnet ist. Es weist grundsätzlich über der Frequenz die Form einer gaußschen Glockenkurve auf. Das durch die FFT gebildete Frequenzspektrum weist eine Anzahl von $1 + N/2$ Spektrallinien auf.

Die Bestimmung der Spektralmaximumfrequenz des Spektralmaximums erfolgt mit einer Genauigkeit des Spektralfrequenzschritts $\Delta f$. Oftmals ist die Genauigkeit der Bestimmung der Spektralmaximumfrequenz und somit auch des unter Verwendung der Spektralmaximumfrequenz bestimmten Abstands zwischen dem Radargerät und dem Objekt nicht ausreichend genau für eine Anwendung. Die Genauigkeit der Bestimmung der Spektralmaximumfrequenz kann jedoch durch verschiedene Verfahren verbessert werden. Die Genauigkeit ist dann verbessert, wenn die bestimmte Spektralmaximumfrequenz näher an der tatsächlichen Spektralmaximumfrequenz liegt. Die tatsächliche Spektralmaximumfrequenz ist die Frequenz, bei welcher das Spektralmaximum liegt.

Gemäß einem solchen Verfahren wird zwischen Spektrallinien eine Interpolation vorgenommen und die Spektralmaximumfrequenz unter Verwendung der Interpolation mit einer größeren Genauigkeit bestimmt.

Gemäß einem anderen Verfahren werden zu den Messwerten vor der Bestimmung des Frequenzspektrums Nullen hinzugefügt, um den Spektralfrequenzschritt $\Delta f$ zu reduzieren. Die hinzugefügten Nullen werden als Messwerte gewertet und erhöhen somit auch $N$. Durch den reduzierten Spektralfrequenzschritt weist die bestimmte Spektralmaximumfrequenz eine größere Genauigkeit auf. Verfahren bei denen die Anzahl der Messwerte des Mischsignals, welche für die Bestimmung des Frequenzspektrums verwendet werden, erhöht wird, werden hier nicht berücksichtigt.

Gemäß einem weiteren Verfahren wird das Frequenzspektrum des Mischsignals unter Verwendung einer Chirp-Z-Transformation bestimmt. Die Chirp-Z-Transformation wird mit CZT abgekürzt.

Fourierkoeffizienten $S_k$ der CZT werden gemäß der folgenden Formel bestimmt:

$$S_k = \sum_{n=0}^{N-1} s_n A^{-n} W^{nk} \ \text{ mit } k = 1, 2, ..., M-1$$

Alternativ können Fourierkoeffizienten $S_k$ der CZT auch gemäß der folgenden Formel berechnet werden:

$$S_k = W^{\frac{k^2}{2}} \sum_{n=0}^{N-1} s_n A^{-n} W^{\frac{n^2}{2}} W^{-\frac{(k-n)^2}{2}} \ \text{ mit } k = 0, 1, 2, ..., M-1$$

In den beiden obigen Formeln sind $s_n$ wieder die zeitdiskreten Messwerte des Mischsignals und ist $N$ wieder die Anzahl der Messwerte. $M$ ist die Anzahl von Fourierfrequenzen. Sie ist wählbar und wird zum Beispiel vorgegeben.

$A$ in obiger Formel wird gemäß der folgenden Formel bestimmt:

$$A = e^{2\pi j \frac{f_{min}}{f_S}}$$

$W$ in obiger Formel wird gemäß der folgenden Formel bestimmt:

$$W = e^{-2\pi j \frac{1}{M} \frac{f_{max} - f_{min}}{f_S}}$$

$f_{min}$ ist eine untere und $f_{max}$ eine obere Grenzfrequenz des Frequenzspektrums. Im Vergleich zu den anderen beschriebenen Verfahren zur Vergrößerung der Genauigkeit der Bestimmung der Spektralmaximumfrequenz ausgehend von einer FFT leistet dieses Verfahren die höchste Vergrößerung der Genauigkeit.

Ein Nachteil des zuvor beschriebenen gattungsgemäßen Verfahrens ist ein hoher Energiebedarf des Radargeräts für die Bestimmung des Abstands zwischen dem Radargerät und dem Objekt bei Ausführung des Verfahrens, wenn eine Anwendung eine möglichst hohe Genauigkeit der Bestimmung der Spektralmaximumfrequenz erfordert und deshalb das oben beschriebene Verfahren unter Verwendung der CZT vom Radargerät umgesetzt wird.

Aufgabe der vorliegenden Erfindung ist somit die Angabe eines gattungsgemäßen Verfahrens und eines gattungsgemäßen Radargeräts, bei welchen der Energiebedarf für die Bestimmung des Abstands bei Ausführung des Verfahrens reduziert ist, ohne dass die Genauigkeit der Bestimmung des Abstands beeinträchtigt ist.

Die Aufgabe ist durch ein Verfahren gemäß Anspruch 1 gelöst. Das Verfahren modifiziert das gattungsgemäße Verfahren und stellt somit auch ein frequenzmoduliertes Dauerstrichradar dar. Das modifizierte Verfahren weist die folgenden Schritte auf:

In einem ersten Schritt werden die folgenden Teilschritte ausgeführt:

- Erzeugen und Aussenden eines frequenzmodulierten Sendesignals.

- Empfangen eines vom Sendesignal am Objekt hervorgerufenen Reflexionssignals.

- Mischen des Sendesignals und des Reflexionssignals miteinander zu einem Mischsignal.

In einem zweiten Schritt werden die folgenden Teilschritte ausgeführt:

- Bestimmen eines Grobfrequenzspektrums des Mischsignals in einem Grobfrequenzbereich.

- Bestimmen eines Spektralmaximums im Grobfrequenzspektrum.

- Bestimmen einer Grobspektralmaximumfrequenz des Spektralmaximums im Grobfrequenzbereich.

In einem dritten Schritt werden unter Berücksichtigung der Grobspektralmaximumfrequenz zum einen ein Frequenzbereich und zum anderen eine Anzahl an Spektralfrequenzen im Frequenzbereich bestimmt. Dabei ergibt ein Quotient aus dem Frequenzbereich und der Anzahl einen Zielspektralfrequenzschritt. Die Grobspektralmaximumfrequenz liegt dabei im Frequenzbereich und der Frequenzbereich ist kleiner als der Grobfrequenzbereich. Vorzugsweise ist der Frequenzbereich möglichst eng um das Grobspektralmaximumfrequenz.

In einem vierten Schritt wird ein Feinfrequenzspektrum des Mischsignals im Frequenzbereich mit der Anzahl an Spektralfrequenzen unter Verwendung einer Chirp-Z-Transformation bestimmt. Im Gegensatz zur FFT kann bei der CZT zum einen der Frequenzbereich und zum anderen die Anzahl an Spektralfrequenzen im Frequenzbereich unabhängig von einer Anzahl an Messwerten gewählt werden.

In einem fünften Schritt wird eine Feinspektralmaximumfrequenz des Spektralmaximums im Frequenzbereich bestimmt. Die Bestimmung erfolgt dabei mit einer Genauigkeit des Zielspektralfrequenzschritts. Der Zielspektralfrequenzschritt wird zum Beispiel in Abhängigkeit einer Anwendung vorgegeben.

In einem sechsten Schritt wird ein Abstand zwischen dem Radargerät und dem Objekt unter Verwendung der Feinspektralmaximumfrequenz bestimmt. Vorzugsweise wird der Abstand einem Benutzer angezeigt.

Das Radargerät, welches das Verfahren ausführt, weist für gewöhnlich eine Steuerung und eine Antennenvorrichtung auf. Die Schritte des Verfahrens werden von der Steuerung ausgeführt, wobei das Aussenden des Sendesignals und das Empfangen des Reflexionssignals von der Steuerung, wie zuvor beschrieben, über die Antennenvorrichtung erfolgt.

Im Vergleich mit dem beschriebenen Verfahren aus dem Stand der Technik, welches ebenfalls die CZT einsetzt, ist ein Energiebedarf des Radargeräts bei Ausführung des Verfahrens geringer, ohne die Genauigkeit der Bestimmung des Abstands zu beeinträchtigen. Der geringere Energiebedarf ergibt sich daraus, dass die CZT nur im Frequenzbereich eingesetzt wird und dieser kleiner ist als der Grobfrequenzbereich.

Das Verfahren lässt sich auf verschiedene Weisen ausgestalten und weiterbilden. Auch diese Schritte werden dabei von dem Radargerät, vorzugsweise von der Steuerung, ausgeführt.

In einer ersten Ausgestaltung des Verfahrens wird zunächst der erste Schritt erneut ausgeführt. Dann werden in einem Schritt unter Berücksichtigung der zuvor bestimmten Feinspektralmaximumfrequenz zum einen wieder ein Frequenzbereich und zum anderen wieder eine Anzahl an Spektralfrequenzen im Frequenzbereich bestimmt. Dabei ergibt ein Quotient aus dem Frequenzbereich und der Anzahl wieder den Zielspektralfrequenzschritt. Bei diesem Schritt handelt es sich um einen modifizierten dritten Schritt, bei dem anstelle der Grobspektralmaximumfrequenz, die zuvor bestimmten Feinspektralmaximumfrequenz berücksichtigt wird. Die Berücksichtigung der Feinspektralmaximumfrequenz erfolgt insbesondere derart, dass sie im Frequenzbereich liegt. Dann wird der vierte Schritt erneut ausgeführt. Danach wird ein Spektralmaximum im Feinfrequenzspektrum gesucht. Falls ein Spektralmaximum gefunden worden ist, werden eine Feinspektralmaximumfrequenz des Spektralmaximums im Feinfrequenzspektrum bestimmt und der sechste Schritt erneut ausgeführt.

Es bietet sich an, diese Ausgestaltung des Verfahrens kontinuierlich auszuführen. Bei einer kontinuierlichen Ausführung wird auch der Abstand zwischen dem Radargerät und dem Objekt kontinuierlich bestimmt, also in regelmäßigen Zeitabständen aktualisiert. Der zweite Schritt wird dabei nicht ausgeführt, ein Grobfrequenzspektrum wird also nicht erneut bestimmt. Folglich kommt nur noch die CZT im Frequenzbereich zum Einsatz, was den Energiebedarf weiter reduziert.

Falls in dieser Ausgestaltung ein Spektralmaximum nicht gefunden worden ist, dann gibt es mehrere zueinander alternative Ausgestaltungen, ein solches doch noch zu finden.

In einer ersten der alternativen Ausgestaltungen wird zunächst der erste Schritt erneut ausgeführt. Dann werden in einem Schritt unter Berücksichtigung der zuvor bestimmten Feinspektralmaximumfrequenz zum einen wieder ein Frequenzbereich und zum anderen wieder eine Anzahl an Spektralfrequenzen im Frequenzbereich bestimmt. Vorzugsweise ist der Frequenzbereich größer als der zuvor bestimmte Frequenzbereich. Dabei ergibt ein Quotient aus dem Frequenzbereich und der Anzahl einen Spektralfrequenzschritt größer als den Zielspektralfrequenzschritt. Bei diesem Schritt handelt es sich um einen modifizierten dritten Schritt, bei dem insbesondere der Quotient nicht den Zielspektralfrequenzschritt ergibt, sondern größer ist. Dann wird der vierte Schritt erneut ausgeführt. Danach wird ein Spektralmaximum im Feinfrequenzspektrum gesucht. Falls ein Spektralmaximum gefunden worden ist, wird eine Feinspektralmaximumfrequenz des Spektralmaximums im Frequenzbereich bestimmt und werden der dritte, der vierte, der fünfte und der sechste Schritt erneut ausgeführt. Durch das erneute Ausführen des dritten, des vierten, des fünften und des sechsten Schritts wird wieder der Zielspektralfrequenzschritt eingestellt und erfolgt die Bestimmung des Abstands mit der Genauigkeit des Zielspektralfrequenzschritts.

In einer Weiterbildung der vorstehenden Ausgestaltung werden, falls ein Spektralmaximum erneut nicht gefunden worden ist, die Schritte gemäß der vorstehenden Ausgestaltung erneut ausgeführt. Vorzugsweise wird dabei der Frequenzbereich vergrößert.

In einer zweiten der alternativen Ausgestaltungen wird zunächst der erste Schritt erneut ausgeführt. Dann werden unter Berücksichtigung der zuvor bestimmten Feinspektralmaximumfrequenz zum einen ein Frequenzbereich abweichend vom zuvor bestimmten Frequenzbereich und zum anderen eine Anzahl an Spektralfrequenzen im Frequenzbereich abweichend von der zuvor bestimmten Anzahl bestimmt. Vorzugsweise ist der Frequenzbereich größer als der zuvor bestimmte Frequenzbereich. Dabei ergibt ein Quotient aus dem Frequenzbereich und der Anzahl den Zielspektralfrequenzschritt. Bei diesem Schritt handelt es sich um einen modifizierten dritten Schritt. Dann wird der vierte Schritt erneut ausgeführt. Danach wird ein Spektralmaximum im Feinfrequenzspektrum gesucht. Falls ein Spektralmaximum gefunden worden ist, werden eine Feinspektralmaximumfrequenz des Spektralmaximums im Frequenzbereich bestimmt und der sechste Schritt erneut ausgeführt. Ein erneutes Ausführen des dritten, des vierten und des fünften Schritts ist nicht erforderlich, da bereits der Zielspektralfrequenzschritt eingestellt ist und folglich die Bestimmung des Abstands mit der Genauigkeit des Zielspektralfrequenzschritts erfolgt.

In einer Weiterbildung der vorstehenden Ausgestaltung werden, falls ein Spektralmaximum nicht gefunden worden ist, die Schritte gemäß der vorstehenden Ausgestaltung erneut ausgeführt. Vorzugsweise wird dabei der Frequenzbereich vergrößert.

In einer dritten der alternativen Ausgestaltungen werden der zweite Schritt, der dritte, der vierte, der fünfte und der sechste Schritt erneut ausgeführt. Diese Ausgestaltung wird vorzugsweise erst dann ausgeführt, wenn beim Ausführen der ersten alternativen Ausgestaltung und/oder der zweiten alternativen Ausgestaltung kein Spektralmaximum gefunden worden ist. Denn bei der dritten alternativen Ausgestaltung wird wieder der zweite Schritt ausgeführt, in welchem ein Grobfrequenzspektrum des Mischsignals bestimmt wird, was einen zusätzlichen Energiebedarf bedeutet.

Falls in einer der alternativen Ausgestaltungen ein Spektralmaximum gefunden worden und der Abstand bestimmt worden ist, dann wird vorzugsweise die erste Ausgestaltung des Verfahrens erneut ausgeführt. Falls in keiner der alternativen Ausgestaltungen ein Spektralmaximum gefunden worden ist, dann wird das Verfahren gemäß Anspruch 1 erneut ausgeführt. Das Verfahren wird somit kontinuierlich ausgeführt und das Radargerät, welches das Verfahren ausführt, ist in einem kontinuierlichen Betrieb.

In einer weiteren Ausgestaltung des Verfahrens erfolgt die Bestimmung des Frequenzbereichs und der Anzahl an Spektralfrequenzen unter zusätzlicher Berücksichtigung des zuvor bestimmten Abstands. Durch die zusätzliche Berücksichtigung des zuvor bestimmten Abstands wird der Frequenzbereich enger um die tatsächliche Spektralmaximumfrequenz bestimmt.

In einer weiteren Ausgestaltung des Verfahrens wird eine Geschwindigkeit einer Änderung des zuvor bestimmten Abstands bestimmt und erfolgen die Bestimmung des Frequenzbereichs und der Anzahl an Spektralfrequenzen unter zusätzlicher Berücksichtigung der Geschwindigkeit. Durch die zusätzliche Berücksichtigung der Geschwindigkeit wird der Frequenzbereich enger um die tatsächliche Spektralmaximumfrequenz bestimmt.

In einer Ausgestaltung des Verfahrens wird das Grobfrequenzspektrum des Mischsignals unter Verwendung einer FFT bestimmt. Eine FFT ist zur Bestimmung des Grobfrequenzspektrums geeignet, da sie ein Frequenzspektrum in einem Frequenzbereich zwischen 0 und $f_S/N$ erzeugt. Das Spektralmaximum, welches den Abstand repräsentiert, wird auf jeden Fall in diesem Frequenzbereich liegen. Somit ermöglicht die Verwendung der FFT eine grobe Bestimmung der tatsächlichen Spektralmaximumfrequenz des Spektralmaximums, also der Grobspektralmaximumfrequenz.

In einer weiteren Ausgestaltung wird der Grobfrequenzbereich unter Verwendung einer Bandbreite des Sendesignals und/oder einer vorgegebenen maximalen Geschwindigkeit zwischen dem Radargerät und dem Objekt bestimmt.

In einer weiteren Ausgestaltung wird das Sendesignal mit einer über einem Sendeintervall $\Delta t$ ansteigenden oder absteigenden Frequenz erzeugt. Das Sendeintervall ist eine Dauer, in welcher das Sendesignal ausgesendet wird. Vorzugsweise weist die ansteigende Frequenz eine konstante Steigung über der Zeit im Sendeintervall auf. Dieses Sendesignal ist auf einfache Weise erzeugbar und resultiert in einer hohen Genauigkeit der Bestimmung des Abstands des Objekts.

In einer Weiterbildung der vorstehenden Ausgestaltung des Verfahrens wird der Frequenzbereich durch eine obere Grenzfrequenz $f_{max}$ und eine untere Grenzfrequenz $f_{min}$ begrenzt. Die obere Grenzfrequenz $f_{max}$ wird als proportional zu einem Produkt aus einem vorgegebenen maximalen Abstand $d_{max}$ zwischen dem Radargerät und dem Objekt, dem Sendeintervall $\Delta t$ und dem Kehrwert der Lichtgeschwindigkeit $1/c_0$ bestimmt. Bei der Lichtgeschwindigkeit handelt es sich um eine Vakuumlichtgeschwindigkeit. Es gilt also:

$$f_{\max} \propto d_{\max} \cdot \Delta t \cdot \frac{1}{c_0}$$

Vorzugsweise wird die obere Grenzfrequenz als ein Produkt aus dem maximalen Abstand, dem Sendeintervall, dem Kehrwert der Lichtgeschwindigkeit und einem Faktor zwei bestimmt. Es gilt also:

$$f_{\max} = d_{\max} \cdot \Delta t \cdot \frac{1}{c_0} \cdot 2$$

Die untere Grenzfrequenz $f_{min}$ wird in dieser Ausgestaltung als proportional zu einem Produkt aus einem vorgegebenen minimalen Abstand $d_{min}$ zwischen dem Radargerät und dem Objekt, dem Sendeintervall $\Delta t$ und dem Kehrwert der Lichtgeschwindigkeit $1/c_0$ bestimmt. Es gilt also:

$$f_{\min} \propto d_{\min} \cdot \Delta t \cdot \frac{1}{c_0}$$

Vorzugsweise wird die untere Grenzfrequenz als ein Produkt aus dem minimalen Abstand, dem Sendeintervall, dem Kehrwert der Lichtgeschwindigkeit und einem Faktor zwei bestimmt. Es gilt also:

$$f_{\min} = d_{\min} \cdot \Delta t \cdot \frac{1}{c_0} \cdot 2$$

Der maximale Abstand $d_{max}$ und der minimale Abstand $d_{min}$ werden, wie bereits erwähnt, dem Radargerät, also der Steuerung, vorgegeben. Diese sind von der jeweiligen Anwendung des Verfahrens abhängig und leicht bestimmbar. Sie werden vorzugsweise in der Steuerung abgespeichert.

In einer Weiterbildung der vorstehenden Ausgestaltung wird eine Abstandsänderung $\Delta d$ zwischen dem Radargerät und dem Objekt bestimmt, indem zunächst eine Summe aus einer Division der Lichtgeschwindigkeit $c_0$ durch das Doppelte einer Bandbreite $B$ des Sendesignals und einem Produkt aus einer vorgegebenen maximalen Geschwindigkeit $v_{max}$ zwischen dem Radargerät und dem Objekt und einem zeitlichen Abstand $T$ zwischen zwei aufeinanderfolgenden Aussendungen des Sendesignals bestimmt wird. Es gilt also:

$$\Delta d = \frac{c_0}{2B} + v_{\max} \cdot T$$

Weiter wird der maximale Abstand $d_{max}$ bestimmt, indem zu einem zuvor bestimmten Abstand $d$ zwischen dem Radargerät und dem Objekt ein Produkt aus einem Gewichtungsfaktor $k$ und der Abstandsänderung $\Delta d$ addiert wird. Es gilt also:

$$d_{\max} = d + k \cdot \Delta d$$

Weiter wird der minimale Abstand $d_{min}$ bestimmt, indem vom zuvor bestimmten Abstand $d$ zwischen dem Radargerät und dem Objekt ein Produkt aus dem Gewichtungsfaktor $k$ und der Abstandsänderung $\Delta d$ subtrahiert wird. Es gilt also:

$$d_{\max} = d - k \cdot \Delta d$$

Weiter wird der Gewichtungsfaktor zwischen eins und zwei gewählt. Die maximale Geschwindigkeit $v_{max}$ wird dem Radargerät, also der Steuerung, vorgegeben. Diese ist von der jeweiligen Anwendung des Verfahrens abhängig und leicht bestimmbar.

Die Aufgabe ist nicht nur durch das zuvor beschriebene Verfahren, sondern auch durch das Radargerät gemäß Anspruch 15 gelöst. Das Radargerät ist zum Ausführen eines der zuvor beschriebenen Verfahren ausgebildet. Dazu weist es insbesondere eine Steuerung und eine Antennenvorrichtung auf.

In einer Ausgestaltung des Radargeräts ist das Radargerät ein Feldgerät. Vorzugsweise ist es ein Füllstandsmessgerät oder ein Füllstandsschalter. Wenn das Radargerät ein Füllstandsmessgerät oder ein Füllstandsschalter ist, dann ist das Objekt ein Medium, dessen Füllstand in einem Behälter gemessen oder überwacht werden soll. Der Abstand korrespondiert dann mit dem Füllstand des Mediums im Behälter. Das Verfahren ist insbesondere für Anwendungen in Füllstandsmessgeräten und Füllstandsschaltern geeignet, da sich ein Füllstand im Verhältnis zum zeitlichen Abstand T zwischen zwei aufeinanderfolgenden Aussendungen des Sendesignals nur langsam ändert.

In einer weiteren Ausgestaltung weist das Radargerät eine Stromschleifenschnittstelle auf und ist weiter zur Kommunikation über die Stromschleifenschnittstelle und zur ausschließlichen Speisung mit elektrischer Energie über die Stromschleifenschnittstelle aus einer Stromschleife ausgebildet. Das Verfahren ist insbesondere für Radargeräte dieser Ausgestaltung geeignet. Denn die einer Stromschleife entnehmbare Leistung ist so gering, dass sie für die Ausführung der aus dem Stand der Technik bekannten Verfahrens nicht mit Sicherheit ausreicht. Bei dem hier beschriebenen Verfahren ist die Energie für jede Bestimmung des Abstands bei kontinuierlichem Betrieb geringer, sodass ein zuverlässiger Betrieb bei ausschließlicher Speisung des Radargeräts aus einer Stromschleife gewährleistet ist. In einer bevorzugten Weiterbildung ist das Radargerät ein zuvor beschriebenes Füllstandsmessgerät oder ein zuvor beschriebener Füllstandsschalter.

Im Einzelnen ist eine Vielzahl von Möglichkeiten gegeben, das Verfahren und das Radargerät auszugestalten und weiterzubilden. Dazu wird verwiesen sowohl auf die den unabhängigen Ansprüchen nachgeordneten Ansprüche als auch auf die nachfolgende Beschreibung eines bevorzugten Ausführungsbeispiels in Verbindung mit der Zeichnung. In der Zeichnung zeigt

Figur 1      ein Radargerät und ein Objekt,

Figur 2      einen Ablaufplan eines Verfahrens,

Figur 3      Sendesignale und Reflexionssignale über der Zeit,

Figur 4a     ein Grobfrequenzspektrum eines Mischsignals und

Figur 4b     ein Feinfrequenzspektrum des Mischsignals.

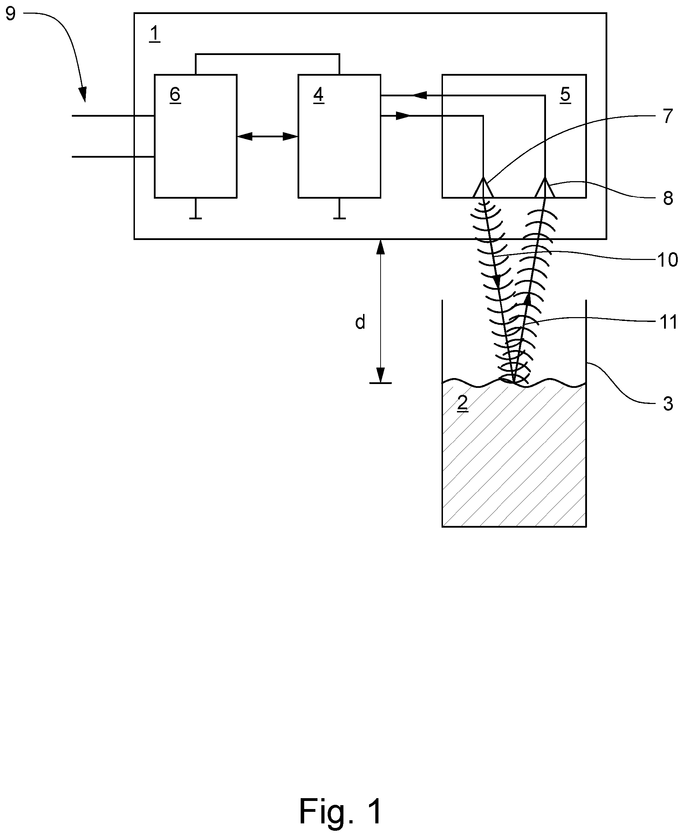

Figur 1 zeigt ein Radargerät 1 und ein Objekt 2. In diesem Ausführungsbeispiel ist das Radargerät 1 ein Füllstandsmessgerät und das Objekt 2 ein Medium mit einem Füllstand in einem Behälter 3. Das Radargerät 1 ist zur kontinuierlichen Bestimmung eines Abstands d zwischen dem Radargerät 1 und dem Objekt 2 ausgebildet. Der Abstand d korrespondiert in diesem Ausführungsbeispiel mit dem Füllstand des Mediums im Behälter 3.

Das Radargerät 1 weist eine Steuerung 4, eine Antennenvorrichtung 5 und eine Stromschleifenschnittstelle 6 auf. Die Antennenvorrichtung 5 weist eine Sendeantenne 7 und eine Empfangsantenne 8 auf. Das Radargerät 1 ist zur Kommunikation über die Stromschleifenschnittstelle 6 und zur ausschließlichen Speisung mit elektrischer Energie über die Stromschleifenschnittstelle 6 aus einer Stromschleife ausgebildet. Es ist über die Stromschleifenschnittstelle 6 mit einer Stromschleife 9 verbunden. Im Betrieb des Radargeräts 1 kommuniziert es über die Stromschleife 9 und wird ausschließlich aus dieser mit elektrischer Energie versorgt. Die Kommunikation umfasst insbesondere eine kontinuierliche Übermittlung des Abstands d.

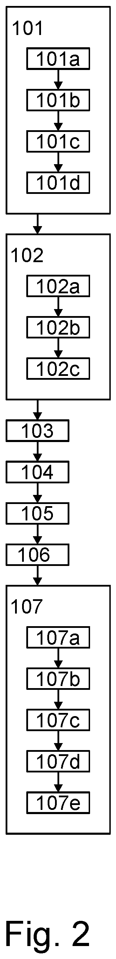

Die Steuerung 4 und damit auch das Radargerät 1 ist zur Ausführung des im Folgenden beschriebenen Verfahrens ausgebildet. Figur 2 zeigt einen Ablaufplan des Verfahrens, welches von der Steuerung 4 ausgeführt wird.

In einem ersten Schritt 101 werden die folgenden Teilschritte ausgeführt:

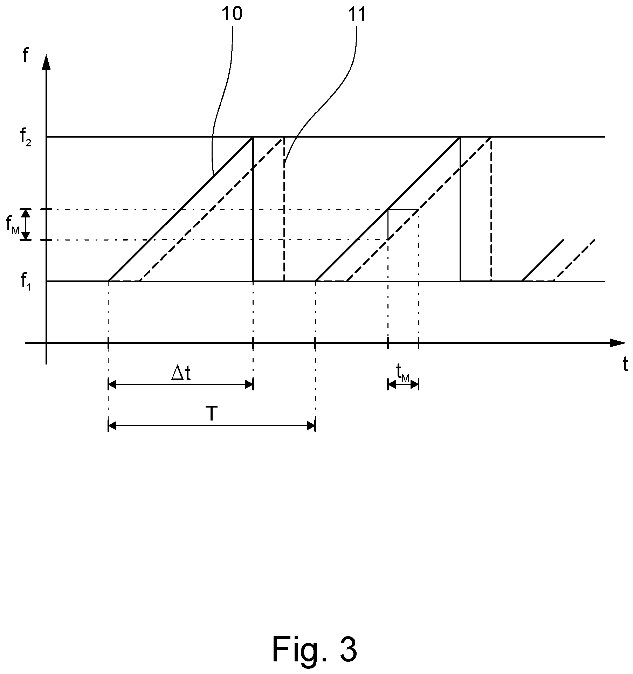

In einem ersten Teilschritt 101a des ersten Schritts 101 wird ein frequenzmoduliertes Sendesignal 10 erzeugt. Figur 3 zeigt das Sendesignal 10 über der Zeit. Das Sendesignal 10 wird dabei über einem Sendeintervall $\Delta t$ mit einer ansteigenden Frequenz $f$ erzeugt. Und zwar steigt die Frequenz $f$ von $f_1$ auf $f_2$ an. Die ansteigende Frequenz $f$ weist eine konstante Steigung im Sendeintervall $\Delta t$ auf. Die Frequenz $f$ liegt in einem Radarfrequenzbereich. Das Sendesignal 10 weist eine

Bandbreite $B = f_2 - f_1$ auf.

In einem zweiten Teilschritt 101b wird das Sendesignal 10 über die Sendeantenne 7 der Antennenvorrichtung 5 ausgesendet. Figur 1 zeigt eine Ausbreitung des Sendesignals 10, welches eine elektromagnetische Welle ist, in Richtung auf das Objekt 2.

In einem dritten Teilschritt 101c wird über die Empfangsantenne 8 der Antennenvorrichtung 5 ein vom Sendesignal 10 am Objekt 2 hervorgerufenes Reflexionssignal 11 empfangen, welches ebenfalls eine elektromagnetische Welle ist. Figur 1 zeigt eine Ausbreitung des Reflexionssignals 10 in Richtung auf das Radargerät 1 und Figur 3 zeigt das Reflexionssignal 10 über der Zeit.

In einem vierten Teilschritt 101d werden das Sendesignal 10 und das Reflexionssignal 11 miteinander zu einem Mischsignal gemischt. Das Reflexionssignal 11 ist gegenüber dem Sendesignal 10 um eine Verzögerungszeit $t_M$ verzögert, siehe Figur 3. Das Mischsignal weist eine Schwebung mit einer Schwebungsfrequenz $f_M$ auf. Die Schwebungsfrequenz $f_M$ und die Verzögerungszeit $t_M$ korrespondieren zueinander. Somit kann aus der Schwebungsfrequenz $f_M$ unter zusätzlicher Verwendung einer Lichtgeschwindigkeit $c_0$ der tatsächliche Abstand $d$ exakt bestimmt werden.

In einem zweiten Schritt 102 werden die folgenden Teilschritte ausgeführt:

In einem ersten Teilschritt 102a des zweiten Schritts 102 wird ein Grobfrequenzspektrum des Mischsignals in einem Grobfrequenzbereich unter Verwendung einer FFT bestimmt. Dabei werden Fourierkoeffizienten $S_{k,FFT}$ gemäß der folgenden Formel bestimmt:

$$S_{k,FFT} = \sum_{n=0}^{N-1} s_n e^{-2\pi j \frac{n}{N} k} \text{ mit } k = 0,\ 1,\ 2,\ ...,\ N-1$$

In der obigen Formel ist $k$ ein Laufindex und sind $s_n$ zeitdiskrete Messwerte des Mischsignals. Auch diese werden von der Steuerung 4 gemessen. $N$ ist die Anzahl der Messwerte.

Die zu den Fourierkoeffizienten $S_{k,FFT}$ gehörenden Fourierfrequenzen $f_{k,FFT}$ werden gemäß der folgenden Formel bestimmt:

$$f_{k,FFT} = \frac{k}{N} f_s \text{ mit } k = 0,\ 1,\ 2,\ ...,\ \frac{N}{2}$$

In der Formel ist $f_s$ eine Abtastfrequenz, mit welcher von der Steuerung 4 die Messwerte $s_n$ des Mischsignals zeitdiskret abgetastet werden.

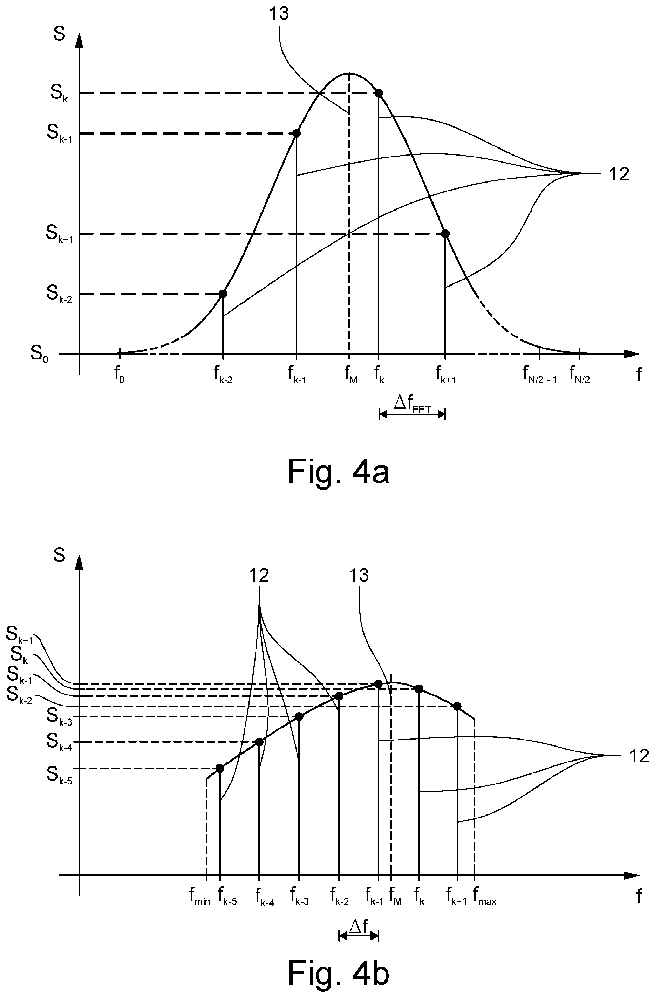

Figur 4a zeigt schematisch Spektrallinien 12 des unter Verwendung der FFT bestimmten Grobfrequenzspektrums. Jede der Spektrallinien 12 ist durch einen Fourierkoeffizienten $S_{k,FFT}$, dort als $S_k$ eingetragen, und seiner dazugehörigen Fourierfrequenz $f_{k,FFT}$, dort als $f_k$ eingetragen, bestimmt. Ein Grobspektralfrequenzschritt von zwei aufeinander folgenden Spektrallinien ist $\Delta f_{FFT} = f_s / N$. Die Spektrallinie 12 mit der niedrigsten Fourierfrequenz liegt bei einer unteren Grenzfrequenz $f_{min,FFT} = f_0 = 0$ und die Spektrallinie 12 mit der höchsten Fourierfrequenz ergibt sich für $k = N/2$ und liegt bei einer oberen Grenzfrequenz von $f_{max,FFT} = f_{N/2} = f2$.

Der Grobfrequenzbereich reicht von der unteren Grenzfrequenz $f_{min,FFT}$ bis zur oberen Grenzfrequenz $f_{max,FFT}$. Das Grobfrequenzspektrum weist grundsätzlich über der Frequenz die Form einer gaußschen Glockenkurve auf.

In einem zweiten Teilschritt 102b wird ein Spektralmaximum 13 im Grobfrequenzspektrum bestimmt. Die Bestimmung ergibt, dass das Spektralmaximum 13 zwischen der Spektrallinie 12 mit der Fourierfrequenz $f_{k-1,FFT}$ und der Spektrallinie 12 mit der Fourierfrequenz $f_{k,FFT}$ liegt.

In einem dritten Teilschritt 102c wird eine Grobspektralmaximumfrequenz des Spektralmaximums 13 im Grobfrequenzbereich bestimmt. Die Bestimmung ergibt, dass die Fourierfrequenz $f_{k,FFT}$ am nächsten am Spektralmaximum 13 liegt. Die Grobspektralmaximumfrequenz ist also $f_{k,FFT}$.

In einem dritten Schritt 103 wird zum einen ein möglichst enger Frequenzbereich um die Grobspektralmaximumfrequenz $f_{k,FFT}$ und zum anderen eine Anzahl M an Spektralfrequenzen im Frequenzbereich bestimmt. Der Frequenzbereich wird durch eine untere Grenzfrequenz $f_{min}$ und eine obere Grenzfrequenz $f_{max}$ begrenzt. In diesem Ausführungsbeispiel ist $f_{min} = f_{k-1,FFT}$ und ist $f_{max} = f_{k,FFT}$. Im Frequenzbereich liegt das Spektralmaximum 13. Die Enge des Frequenzbereichs um die Grobspektralmaximumfrequenz $f_{k,FFT}$ ist dabei in einer Auflösung durch den Spektralfrequenzschritt $\Delta f_{FFT}$ begrenzt. Weiter wird ein Quotient aus dem Frequenzbereich ($f_{max} - f_{min}$) und der Anzahl $M$ gebildet. Dieser ist ein Zielspektralfrequenzschritt $\Delta f$. Es gilt also:

$$\Delta f = \frac{f_{max} - f_{min}}{M}$$

Die Anzahl M wird dabei derart bestimmt, dass der Zielspektralfrequenzschritt $\Delta f$ eine Genauigkeit der Bestimmung des Abstands $d$ ergibt, welche für die Anwendung ausreichend ist.

In einem vierten Schritt 104 wird ein Feinfrequenzspektrum des Mischsignals im Frequenzbereich, also zwischen $f_{min}$ und $f_{max}$, mit der Anzahl $M$ an Spektralfrequenzen unter Verwendung einer CZT bestimmt. Dabei werden Fourierkoeffizienten $S_k$ gemäß der folgenden Formel bestimmt:

$$S_k = \sum_{n=0}^{N-1} s_n A^{-n} W^{nk} \quad \text{mit } k = 1,\ 2,\ \dots,\ M-1$$

In der obigen Formel ist $k$ ein Laufindex, sind $s_n$ wieder die zeitdiskreten Messwerte des Mischsignals und ist $N$ wieder die Anzahl der Messwerte. Der Laufindex $k$ im Zusammenhang mit der FFT ist verschieden vom Laufindex $k$ im Zusammenhang mit der CZT.

$A$ in obiger Formel wird gemäß der folgenden Formel bestimmt:

$$A = e^{2\pi j \frac{f_{\min}}{f_S}}$$

W in obiger Formel wird gemäß der folgenden Formel bestimmt:

$$W = e^{-2\pi j \frac{1}{M} \frac{f_{\max} - f_{\min}}{f_S}}$$

$f_s$ ist die bekannte Abtastfrequenz. Figur 4b zeigt schematisch Spektrallinien 12 des unter Verwendung der CZT bestimmten Feinfrequenzspektrums.

In einem fünften Schritt 105 wird eine Feinspektralmaximumfrequenz des Spektralmaximums 13 im Frequenzbereich bestimmt. Die Bestimmung ergibt, dass die Frequenz $f_{k-1}$ am nächsten am Spektralmaximum 13 liegt. Die Feinspektralmaximumfrequenz ist also $f_{k-1}$.

In einem sechsten Schritt 106 wird der Abstand d zwischen dem Radargerät 1 und dem Objekt 2 unter Verwendung der Feinspektralmaximumfrequenz $f_{k-1}$ bestimmt. Das Spektralmaximum 13 repräsentiert die Schwebung. Im Idealfall entspricht die Feinspektralmaximumfrequenz $f_{k-1}$ der Schwebungsfrequenz $f_M$. Ein Ziel des Verfahrens ist die Bestimmung der Feinspektralmaximumfrequenz $f_{k-1}$ für die Anwendung ausreichend nah an der Schwebungsfrequenz $f_M$.

In einem siebten Schritt 107 werden die folgenden Teilschritte ausgeführt:
In einem ersten Teilschritt 107a des siebten Schritts 107 wird der erste Schritt 101 erneut ausgeführt, wobei der erste Teilschritt 101a vorzugsweise ausgelassen wird.

In einem zweiten Teilschritt 107b wird unter Berücksichtigung der zuvor bestimmten Feinspektralmaximumfrequenz $f_{k-1}$ zum einen wieder ein Frequenzbereich, der wieder durch eine oberere Grenzfrequenz $f_{max}$ und eine untere Grenzfrequenz $f_{min}$ begrenzt ist, und zum anderen wieder eine Anzahl $M$ an Spektralfrequenzen im Frequenzbereich bestimmt, wobei ein Quotient aus dem Frequenzbereich und der Anzahl $M$ wieder den Zielspektralfrequenzschritt $\Delta f$ ergibt.

In einem dritten Teilschritt 107c wird der vierte Schritt 104 erneut ausgeführt.

In einem vierten Teilschritt 107d wird ein Spektralmaximum 13 im Feinfrequenzspektrum gesucht und hier auch gefunden.

In einem fünften Teilschritt 107e werden eine Feinspektralmaximumfrequenz des Spektralmaximums 13 im Frequenzbereich bestimmt und der sechste Schritt 106 erneut ausgeführt.

Durch den siebten Schritt 107 wird das Verfahren kontinuierlich vom Radargerät 1 ausgeführt und jede Ausführung liefert den aktuellen Abstand d zwischen dem Radargerät 1 und dem Objekt 2, also hier den aktuellen Füllstand des Mediums im Behälter 3.

Nach der ersten Bestimmung des Abstands $d$ zwischen dem Radargerät 1 und dem Objekt 2 wird der Frequenzbereich, der, wie oben bereits angegeben, durch die obere Grenzfrequenz $f_{max}$ und die untere Grenzfrequenz $f_{min}$ begrenzt ist, wie folgt bestimmt.

Die obere Grenzfrequenz wird gemäß der folgenden Formel bestimmt:

$$f_{\max} = d_{\max} \cdot \Delta t \cdot \frac{1}{c_0} \cdot 2$$

Die untere Grenzfrequenz wird gemäß der folgenden Formel bestimmt:

$$f_{\min} = d_{\min} \cdot \Delta t \cdot \frac{1}{c_0} \cdot 2$$

In den beiden obigen Formeln ist $d_{max}$ ein maximaler Abstand und $d_{min}$ ein minimaler Abstand zwischen dem Radargerät 1 und dem Objekt 2. In diesem Ausführungsbeispiel korrespondieren diese mit einem maximalen und minimalen Füllstand des Mediums, also des Objekts 2, im Behälter 3.

Der maximale Abstand $d_{max}$ wird unter Verwendung des zuvor bestimmten Abstands d gemäß der folgenden Formel bestimmt:

$$d_{\max} = d + k \cdot \Delta d$$

Der minimale Abstand $d_{min}$ wird ebenfalls unter Verwendung des zuvor bestimmten Abstands d gemäß der folgenden Formel bestimmt:

$$d_{\max} = d - k \cdot \Delta d$$

In den beiden obigen Formeln ist $\Delta d$ eine Abstandsänderung zwischen dem Radargerät 1 und dem Objekt 2 und ist $k$ ein Gewichtungsfaktor und wird zwischen eins und zwei gewählt.

Die Abstandsänderung $\Delta d$ wird gemäß der folgenden Formel bestimmt:

$$\Delta d = \frac{c_0}{2B} + v_{\max} \cdot T$$

In obiger Formel ist B die Bandbreite des Sendesignals 10, $v_{max}$ eine vorgegebene maximale Geschwindigkeit zwischen dem Radargerät und dem Objekt und $T$ ein zeitlicher Abstand zwischen zwei aufeinanderfolgenden Aussendungen des Sendesignals 10.

Die vorstehend beschriebene Bestimmung des Frequenzbereichs nach der ersten Bestimmung des Abstands d wird in einer alternativen Ausgestaltung auch schon für die erste Bestimmung des Abstands d verwendet, da ein Startwert für den Abstand d vorgegeben wird.

Bezugszeichen

1. Radargerät
2. Objekt
3. Behälter
4. Steuerung
5. Antennenvorrichtung
6. Stromschleifenschnittstelle
7. Sendeantenne
8. Empfangsantenne
9. Stromschleife
10. Sendesignal
11. Reflexionssignal
12. Spektrallinie
13. Spektralmaximum

**Patentansprüche**

1. Verfahren mit einem Radargerät (1) zur Bestimmung eines Abstands (d) zwischen dem Radargerät (1) und einem Objekt (2) mittels frequenzmoduliertem Dauerstrichradar,

    wobei in einem ersten Schritt die Teilschritte Erzeugen und Aussenden eines frequenzmodulierten Sendesignals (10), Empfangen eines vom Sendesignal (10) am Objekt (2) hervorgerufenen Reflexionssignals (11) und Mischen des Sendesignals (10) und des Reflexionssignals (11) miteinander zu einem Mischsignal ausgeführt werden,

wobei dann in einem zweiten Schritt die Teilschritte Bestimmen eines Grobfrequenzspektrums des Mischsignals in einem Grobfrequenzbereich ($f_{min,FFT}$, $f_{max,FFT}$), eines Spektralmaximums (13) im Grobfrequenzspektrum und einer Grobspektralmaximumfrequenz ($f_{k,FFT}$) des Spektralmaximums (13) im Grobfrequenzbereich ($f_{min,FFT}$, $f_{max,FFT}$) ausgeführt werden,

wobei dann in einem dritten Schritt unter Berücksichtigung der Grobspektralmaximumfrequenz ($f_{k,FFT}$) zum einen ein Frequenzbereich ($f_{min}$, $f_{max}$) und zum anderen eine Anzahl *(M)* an Spektralfrequenzen im Frequenzbereich ($f_{min}$, $f_{max}$) bestimmt werden, wobei ein Quotient aus dem Frequenzbereich ($f_{max}$ - $f_{min}$) und der Anzahl *(M)* einen Zielspektralfrequenzschritt ($\Delta f$) ergibt,

wobei dann in einem vierten Schritt ein Feinfrequenzspektrum des Mischsignals im Frequenzbereich ($f_{min}$, $f_{max}$) mit der Anzahl *(M)* an Spektralfrequenzen unter Verwendung einer Chirp-Z-Transformation bestimmt wird,

wobei dann in einem fünften Schritt eine Feinspektralmaximumfrequenz ($f_{k-1}$) des Spektralmaximums (13) im Frequenzbereich ($f_{min}$, $f_{max}$) bestimmt wird und

wobei dann in einem sechsten Schritt ein Abstand (d) zwischen dem Radargerät (1) und dem Objekt (2) unter Verwendung der Feinspektralmaximumfrequenz ($f_{k-1}$) bestimmt wird.

2. Verfahren nach Anspruch 1, wobei der erste Schritt erneut ausgeführt wird,

   wobei dann in einem Schritt unter Berücksichtigung der zuvor bestimmten Feinspektralmaximumfrequenz ($f_{k-1}$) zum einen wieder ein Frequenzbereich ($f_{min}$, $f_{max}$) und zum anderen wieder eine Anzahl *(M)* an Spektralfrequenzen im Frequenzbereich bestimmt werden, wobei ein Quotient aus dem Frequenzbereich ($f_{max}$ - $f_{min}$) und der Anzahl *(M)* den Zielspektralfrequenzschritt ($\Delta f$) ergibt,

   wobei dann der vierte Schritt erneut ausgeführt wird,

   wobei dann ein Spektralmaximum (13) im Feinfrequenzspektrum gesucht wird und

   wobei dann, falls ein Spektralmaximum (13) gefunden worden ist, eine Feinspektralmaximumfrequenz des Spektralmaximums (13) im Frequenzbereich ($f_{min}$, $f_{max}$) bestimmt und der sechste Schritt erneut ausgeführt werden.

3. Verfahren nach Anspruch 2, wobei, falls ein Spektralmaximum (13) nicht gefunden worden ist, der erste Schritt erneut ausgeführt wird,

   wobei dann in einem Schritt unter Berücksichtigung der zuvor bestimmten Feinspektralmaximumfrequenz ($f_{k-1}$) zum einen wieder ein Frequenzbereich ($f_{min}$, $f_{max}$) und zum anderen wieder eine Anzahl *(M)* an Spektralfrequenzen im Frequenzbereich ($f_{min}$, $f_{max}$) bestimmt werden, wobei ein Quotient aus dem Frequenzbereich ($f_{max}$ - $f_{min}$) und der Anzahl *(M)* einen Spektralfrequenzschritt größer als den Zielspektralfrequenzschritt ($\Delta f$) ergibt,

   wobei dann der vierte Schritt erneut ausgeführt wird,

   wobei dann ein Spektralmaximum (13) im Feinfrequenzspektrum gesucht wird,

   wobei dann, falls ein Spektralmaximum (13) gefunden worden ist, eine Feinspektralmaximumfrequenz des Spektralmaximums (13) im Frequenzbereich ($f_{min}$, $f_{max}$) bestimmt wird und der dritte Schritt, der vierte Schritt, der fünfte Schritt und der sechste Schritt erneut ausgeführt werden.

4. Verfahren nach Anspruch 3, wobei, falls ein Spektralmaximum (13) nicht gefunden worden ist, die Schritte gemäß Anspruch 3 erneut ausgeführt werden und wobei vorzugsweise der Frequenzbereich ($f_{min}$, $f_{max}$) vergrößert wird.

5. Verfahren nach Anspruch 2, wobei, falls ein Spektralmaximum (13) nicht gefunden worden ist, der erste Schritt erneut ausgeführt wird,

   wobei dann unter Berücksichtigung der zuvor bestimmten Feinspektralmaximumfrequenz ($f_{k-1}$) zum einen ein Frequenzbereich abweichend vom zuvor bestimmten Frequenzbereich ($f_{min}$, $f_{max}$) und zum anderen eine Anzahl an Spektralfrequenzen im Frequenzbereich abweichend von der zuvor bestimmten Anzahl (M) bestimmt werden, wobei ein Quotient aus dem Frequenzbereich und der Anzahl den Zielspektralfrequenzschritt ($\Delta f$) ergibt,

   wobei dann der vierte Schritt erneut ausgeführt wird,

   wobei dann ein Spektralmaximum (13) im Feinfrequenzspektrum gesucht wird,

   wobei dann, falls ein Spektralmaximum (13) gefunden worden ist, eine Feinspektralmaximumfrequenz des Spektralmaximums (13) im Frequenzbereich bestimmt und der sechste Schritt erneut ausgeführt werden.

6. Verfahren nach Anspruch 5, wobei, falls ein Spektralmaximum (13) nicht gefunden worden ist, die Schritte gemäß Anspruch 5 erneut ausgeführt werden und wobei vorzugsweise der Frequenzbereich ($f_{min}$, $f_{max}$) vergrößert wird.

7. Verfahren nach einem der Ansprüche 2 bis 6, wobei, falls ein Spektralmaximum (13) nicht gefunden worden ist, der zweite Schritt, der dritte Schritt, der vierte Schritt, der fünfte Schritt und der sechste Schritt erneut ausgeführt werden.

8. Verfahren nach einem der Ansprüche 2 bis 7 wobei die Bestimmung des Frequenzbereichs ($f_{min}$, $f_{max}$) und der Anzahl (M) an Spektralfrequenzen unter zusätzlicher Berücksichtigung des zuvor bestimmten Abstands (d) erfolgt.

9. Verfahren nach einem der Ansprüche 2 bis 8, wobei eine Geschwindigkeit einer Änderung des zuvor bestimmten Abstands (d) bestimmt wird und die Bestimmung des Frequenzbereichs und der Anzahl an Spektralfrequenzen unter zusätzlicher Berücksichtigung der Geschwindigkeit erfolgen.

10. Verfahren nach einem der Ansprüche 1 bis 9, wobei das Grobfrequenzspektrum unter Verwendung einer FFT bestimmt wird.

11. Verfahren nach einem der Ansprüche 1 bis 10, wobei der Grobfrequenzbereich ($f_{min,FFT}$, $f_{max,FFT}$) unter Verwendung einer Bandbreite (B) des Sendesignals (10) und/oder einer vorgegebenen maximalen Geschwindigkeit ($v_{max}$) zwischen dem Radargerät (1) und dem Objekt (2) bestimmt wird.

12. Verfahren nach einem der Ansprüche 1 bis 11, wobei das Sendesignal (10) mit einer über einem Sendeintervall ($\Delta t$) ansteigenden oder absteigenden Frequenz (f) erzeugt wird, wobei vorzugsweise die ansteigende Frequenz (f) eine konstante Steigung über der Zeit im Sendeintervall ($\Delta t$) aufweist.

13. Verfahren nach Anspruch 12, wobei der Frequenzbereich durch eine obere Grenzfrequenz ($f_{max}$) und eine untere Grenzfrequenz ($f_{min}$) begrenzt ist, wobei die obere Grenzfrequenz ($f_{max}$) als proportional zu einem Produkt aus einem vorgegebenen maximalen Abstand ($d_{max}$) zwischen dem Radargerät (1) und dem Objekt (2), dem Sendeintervall ($\Delta t$) und dem Kehrwert der Lichtgeschwindigkeit ($c_0$) bestimmt wird,

wobei die untere Grenzfrequenz ($f_{min}$) als proportional zu einem Produkt aus einem vorgegebenen minimalen Abstand ($d_{min}$) zwischen dem Radargerät (1) und dem Objekt (2), dem Sendeintervall ($\Delta t$) und dem Kehrwert der Lichtgeschwindigkeit ($c_0$) bestimmt wird,
wobei vorzugsweise die obere Grenzfrequenz ($f_{max}$) als ein Produkt aus dem maximalen Abstand ($d_{max}$), dem Sendeintervall ($\Delta t$), dem Kehrwert der Lichtgeschwindigkeit ($c_0$) und einem Faktor zwei bestimmt wird und
wobei vorzugsweise die untere Grenzfrequenz ($f_{min}$) als ein Produkt aus dem minimalen Abstand ($d_{min}$), dem Sendeintervall ($\Delta t$), dem Kehrwert der Lichtgeschwindigkeit ($c_0$) und einem Faktor zwei bestimmt wird.

14. Verfahren nach Anspruch 13, wobei eine Abstandsänderung ($\Delta d$) zwischen dem Radargerät (1) und dem Objekt (2) bestimmt wird, indem eine Summe aus einer Division der Lichtgeschwindigkeit ($c_0$) durch das Doppelte einer Bandbreite (B) des Sendesignals (10) und einem Produkt aus einer vorgegebenen maximalen Geschwindigkeit ($v_{max}$) zwischen dem Radargerät (1) und dem Objekt (2) und einem zeitlichen Abstand (T) zwischen zwei aufeinanderfolgenden Aussendungen des Sendesignals (10) bestimmt wird,

wobei der maximale Abstand ($d_{max}$) bestimmt wird, indem zu einem zuvor bestimmten Abstand (d) zwischen dem Radargerät (1) und dem Objekt (2) ein Produkt aus einem Gewichtungsfaktor (k) und der Abstandsänderung ($\Delta d$) addiert wird,
wobei der minimale Abstand ($d_{min}$) bestimmt wird, indem vom zuvor bestimmten Abstand (d) zwischen dem Radargerät (1) und dem Objekt (2) ein Produkt aus dem Gewichtungsfaktor (k) und der Abstandsänderung ($\Delta d$) subtrahiert wird und
wobei der Gewichtungsfaktor (k) zwischen eins und zwei gewählt wird.

15. Radargerät (1) zur Bestimmung eines Abstands zwischen dem Radargerät (1) und einem Objekt (2) mittels frequenzmoduliertem Dauerstrichradar, **dadurch gekennzeichnet, dass** das Radargerät (1) zum Ausführen eines Verfahrens nach einem der Ansprüche 1 bis 14 ausgebildet ist.

16. Radargerät (1) nach Anspruch 15, **dadurch gekennzeichnet, dass** das Radargerät (1) ein Feldgerät ist, vorzugsweise ein Füllstandsmessgerät oder ein Füllstandsschalter.

**17.** Radargerät (1) nach Anspruch 15 oder 16, **dadurch gekennzeichnet, dass** das Radargerät (1) eine Stromschleifenschnittstelle (6) aufweist und zur Kommunikation über die Stromschleifenschnittstelle (6) und zur ausschließlichen Speisung mit elektrischer Energie über die Stromschleifenschnittstelle (6) aus einer Stromschleife (9) ausgebildet ist.

# Fig. 1

Fig. 2

Fig. 3

Fig. 4a

Fig. 4b